# EUROPEAN PATENT APPLICATION

(11) **EP 3 778 994 A1**
(43) Date of publication of application: **17.02.2021**
(21) Application number: 19781840.4
(22) Date of filing: 18.03.2019
(51) Int. Cl.: C25D 5/44, C25D 5/10, C25D 7/00, H01B 5/02, H01B 7/00, H01B 7/02

(54) **PLATED WIRE ROD**

(30) Priority: 06.04.2018 JP 2018073807
(71) Applicant: FURUKAWA ELECTRIC CO., LTD., Chiyoda-ku Tokyo 100-8322 (JP)
(72) Inventor: YAMAUCHI Miho, Tokyo 100-8322 (JP); OGIWARA Yoshiaki, Tokyo 100-8322 (JP)
(74) Representative: Winter, Brandl, Fürniss, Hübner, Röss, Kaiser, Polte - Partnerschaft mbB
(86) International application number: PCT/JP2019/011107
(87) International publication number: WO 2019/193960

(57) **Abstract**

Provided is a plated wire rod having excellent salt water corrosion resistance, solder wettability, thermal peeling resistance, and fatigue resistance. A plated wire rod having a wire rod made of aluminum or an aluminum alloy, and a surface treatment coating which is constituted by one or more metal layers and with which the wire rod is coated, the plated wire rod comprising: a mixed layer in a boundary region between the wire rod and the surface treatment coating, the mixed layer containing a metal component of the wire rod, a metal component of the surface treatment coating, and an oxygen component, wherein the one or more metal layers constituting the surface treatment coating includes an innermost metal layer which is located closest to the wire rod among the one or more metal layers, the innermost metal layer being made of copper or a copper alloy.

## Description

### TECHNICAL FIELD

The present invention relates to a plated wire rod having a wire rod made of aluminum or an aluminum alloy and a surface treatment coating with which the wire rod is coated.

### BACKGROUND ART

Recently, due to size reduction and weight reduction of automobiles and electronic devices, wire rods such as electric wires and cables for use in the automobiles and the electronic devices have also been required to be reduced in size and weight. Copper has conventionally been used as a material for wire rods such as electric wires and cables because copper has a high conductivity and is highly resistant to corrosion. However, copper, which has a relatively large specific gravity, makes it difficult to achieve a significant weight reduction. On the other hand, despite having a lower conductivity than copper, aluminum is expected to serve as a lightweight material for wires because its specific gravity is about one third of that of copper. However, aluminum is less reliable in terms of electrical connection than copper because an extremely stable oxide film is formed on the surface of an aluminum material. In addition, aluminum involves a problem in that it has a low solder wettability and is difficult to solder.

To solve the above problems, for example, Patent Document 1, proposes a copper-clad aluminum wire. This copper-clad aluminum wire includes a core material made of Al-Mg based aluminum, and the periphery of the core material is coated with copper having a purity of 99.9% or higher at an area coverage rate of 20% or more and 40% or less. This configuration in which aluminum is coated with copper allows the copper-clad aluminum wire to have improved solderability and salt water corrosion resistance.

However, since the copper coating layer is thick, the copper-clad aluminum wire disclosed in Patent Document 1 is less effective in weight reduction than a wire made of aluminum alone. Further, when the copper-clad aluminum wires are subjected to a wiredrawing operation, work hardening occurs to make it difficult to draw the wires, thereby giving rise to a problem of the wires frequently breaking. By performing annealing at the time of the wiredrawing operation, the wire can be drawn suitably. However, there is a problem in that the annealing in which the wire is heated at a high temperature for a long time causes an intermetallic compound to form and grow at an interface between copper and aluminum, thereby impairing mechanical properties such as tensile strength. Furthermore, wires need to be soft in order to be employed as cables or electric wires for use in electronic devices that are expected to further decrease in size in the future and to be employed as voice coils and the like. However, the copper-clad aluminum wire is insufficiently soft because of the influence of the work hardening and the intermetallic compound.

Clad materials involve a problem in that a difference in elongation and a difference in hardness impose limitations on metal species for use as the coating layer. In addition, it is difficult to form a thin coating layer. On the other hand, plating process enables formation of a thin coating layer.

As a technique to produce an aluminum wire coated with copper, a process for forming copper plating on the aluminum wire by a wet plating method is sometimes used. It has been difficult to form a plating coating having good adhesion on an aluminum material because of an oxide film formed on the aluminum material surface. For this reason, according to a known technique, a zinc substitution process using a zinc-containing solution, which is called the zincate treatment, is performed prior to formation of a plating coating, so that an adhesion strength between the base material (aluminum wire rod) and the plating coating is increased. For example, Patent Document 2 proposes an aluminum wire produced in such a manner that a thin zinc film is formed on the surface of an aluminum conductive wire as a base material by the zinc substitution process, the outer periphery of the thin zinc film is then coated with a nickel-plating coating by electrolytic nickel plating, and the outer periphery of the nickel-plating coating is coated with a copper-plating coating by electrolytic copper plating. Since a difference in hardness between the aluminum conductive wire and the nickel-plating coating is adjusted to be 100 Hv or less, the aluminum wire is easy to process by way of cold a wiredrawing operation. In addition, the nickel-plating coating formed on the surface of the aluminum conductive wire provides the wire with a sufficient solderability.

However, since the aluminum wire disclosed in Patent Document 2 includes the thin zinc film between the aluminum wire and the nickel-plating coating, there is a problem in that the plating has a poor thermal delamination resistance. Therefore, heating or the like may cause delamination of the nickel-plating coating, and consequently, delamination of the copper-plating coating.

In the case of subjecting an aluminum wire to a plating process, generally for the purpose of cost reduction, a large-diameter aluminum wire is usually used, and the resultant plated aluminum wire is subjected to a wiredrawing operation. On the other hand, in the zincate treatment, etching is performed to intentionally make the surface of a base material uneven. Thus, an aluminum wire subjected to a plating process after the zincate treatment has a problem in that the unevenness serves as a starting point of rupture when the aluminum wire is subjected to a wiredrawing operation subsequent to the plating process, and may cause the wire to break. Further, the zincate treatment is complicated due to many steps included therein, and is not preferable because it incurs extremely high costs. In addition, subjecting a wire that has undergone the wiredrawing operation and has a desired diameter (final wire diameter) to the zincate treatment and the plating process means that the wiredrawing operation is followed by a large number of further manufacturing steps. Thus, the productivity decreases in manufacturing the plated aluminum wires. Furthermore, also in this case, the unevenness formed on the base material surface by the zincate treatment impairs the fatigue resistance properties, depending on use conditions.
Patent Document 1: Japanese Unexamined Patent Application, Publication No. H04-230905
Patent Document 2: Japanese Unexamined Patent Application, Publication No. 2003-301292

### DISCLOSURE OF THE INVENTION

### Problems to be Solved by the Invention

It is therefore an object of the present invention to solve the problems described above and to provide a plated wire rod which is excellent in salt water corrosion resistance, solder wettability, thermal delamination resistance, and fatigue resistance properties.

### Means for Solving the Problems

The present inventors have made extensive studies to make the findings that regarding a plated wire rod including aluminum as a conductor, by causing a mixed layer containing specific components to be present in a boundary region between the wire rod and a surface treatment coating which includes an innermost metal layer made of copper or a copper alloy and with which the wire rod is coated, the surface treatment coating having an excellent thermal delamination resistance can be formed over the wire rod, and salt water corrosion resistance, solder wettability, and strength against fatigue can be improved.

Specifically, the present invention has the following principal aspects.
(1) A first aspect is directed to a plated wire rod having a wire rod made of aluminum or an aluminum alloy, and a surface treatment coating which is constituted by one or more metal layers and with which the wire rod is coated. The plated wire rod includes a mixed layer in a boundary region between the wire rod and the surface treatment coating, the mixed layer containing a metal component of the wire rod, a metal component of the surface treatment coating, and an oxygen component, wherein the one or more metal layers constituting the surface treatment coating includes an innermost metal layer which is located closest to the wire rod among the one or more metal layers, the innermost metal layer being made of copper or a copper alloy.
(2) A second aspect is an embodiment of the plated wire rod according to the first aspect. In the second aspect, the mixed layer has an average thickness ranging from 1.00 nm to 40 nm, as measured at a transverse cross section of the plated wire rod.
(3) A third aspect is an embodiment of the plated wire rod according to the first aspect. In the third aspect, in an observation of a cross section of the plated wire rod, a linear analysis using a STEM-EDX is performed across an area from a portion of the wire rod to a portion of the surface treatment coating so as to obtain a detected intensity profile of components of the plated wire rod. From the detected intensity profile, a region is specified in which a detected intensity of a main component of the surface treatment coating is 0.5 to 2.0 times a detected intensity of a main component of the wire rod, and a detected intensity of an oxygen component is 0.10 times or more a sum of the detected intensity of the main component of the wire rod and the detected intensity of the main component of the surface treatment coating, and the region specified has an average length ranging from 1.00 nm to 40 nm in a layer-stacking direction of the surface treatment coating.
(4) A fourth aspect is an embodiment of the plated wire rod according to any one of the first to third aspects. In the fourth aspect, the innermost metal layer has an average thickness ranging from 0.01 µm to 110 µm.
(5) A fifth aspect is an embodiment of the plated wire rod according to any one of the first to fourth aspects. In the fifth aspect, the surface treatment coating consists of the innermost metal layer and at least one metal layer, and the at least one metal layer is made of a metal or an alloy selected from the group consisting of nickel, nickel alloys, cobalt, cobalt alloys, iron, iron alloys, copper, copper alloys, tin, tin alloys, silver, silver alloys, gold, gold alloys, platinum, platinum alloys, rhodium, rhodium alloys, ruthenium, ruthenium alloys, iridium, iridium alloys, palladium, and palladium alloys.
(6) The sixth aspect is an embodiment of the plated wire rod according to the fifth aspect. In the sixth aspect, the at least one metal layer consists of at least two metal layers.
(7) A seventh aspect is directed to a method of producing the plated wire rod according to any one of the first to sixth aspects. The method includes a surface activation treatment step in which a surface of the wire rod is treated with an acid solution containing at least one acid selected from the group consisting of sulfuric acid, nitric acid, hydrochloric acid, hydrofluoric acid, phosphoric acid, hydrobromic acid, hydroiodic acid, acetic acid, and oxalic acid at a concentration of 10-500 mL/L in total, and an activation treatment solution containing at least one copper compound selected from the group consisting of copper sulfate, copper nitrate, copper chloride, and copper sulfamate at a content of 0.01-500 g/L in terms of metallic copper, at a treatment temperature of 20-60°C and a current density of 0.1-20 A/dm² for a treatment period of 1-100 seconds.
(8) An eighth aspect is directed to a cable made of the plated wire rod according to any one of the first to sixth aspects.
(9) A ninth aspect is directed to an electric wire made of the plated wire rod according to any one of the first to sixth aspects.
(10) A tenth aspect is direct to a coil made of the plated wire rod according to any one of the first to sixth aspects.
(11) An eleventh aspect is directed to a wire harness made of the plated wire rod according to any one of the first to sixth aspects.
(12) A twelfth aspect is directed to a spring member made of the plated wire rod according to any one of the first to sixth aspects.
(13) A thirteenth aspect is directed to an enameled wire made of the plated wire rod according to any one of the first to sixth aspects.
(14) A fourteenth aspect is directed to a lead wire made of the plated wire rod according to any one of the first to sixth aspects.

### Effects of the Invention

As a result of simplification of the process steps, the plated wire rod according to the present invention can be produced more safely at lower cost, as compared with the conventional plated wire rod made of aluminum and including a zinc-containing layer (in particular, a zincate treatment layer) with a thickness of, for example, about 100 nm interposed between a wire rod and a surface treatment coating. It is conventional common technical knowledge that an oxide which is present in a boundary region between a wire rod made of aluminum or an aluminum alloy and a surface treatment coating impairs the thermal delamination resistance of the surface treatment coating with respect to the wire rod. In contrast, according to the present invention, since the mixed layer containing a metal component of the wire rod, a metal component of the surface treatment coating, and an oxygen component is provided in the boundary region between the wire rod and the surface treatment coating, the plated wire rod of the present invention exhibits an excellent thermal delamination resistance even without being given a mechanical anchoring effect (anchoring effect), and can be produced within a significantly shortened time. Furthermore, the mixed layer containing the metal component (e.g., Al) of the wire rod made of aluminum or an aluminum alloy, the metal component (e.g., Cu) of the surface treatment coating, and the oxygen component (O) functions as a diffusion preventing layer that prevents diffusion of the metal component of the wire rod and the metal component of the surface treatment coating. Consequently, the present invention provides the plated wire rod that is excellent in the thermal delamination resistance and the salt water corrosion resistance, and has sufficient long-term reliability. In addition, since no intermetallic compound is formed even if heat treatment is performed, the present invention provides an aluminum wire having extremely high fatigue resistance, as compared with clad materials and plated materials produced by the zincate treatment. In addition, the solder wettability can also be improved by using a metal having a sufficient solder wettability to form the outermost layer constituting the surface treatment coating. Further, copper or a copper alloy has an extremely high workability, and enables uses in non-magnetic applications. Furthermore, copper or a copper alloy may be used as an underlayer for forming another metal plating layer. For example, when a plating layer having oxygen permeability, such as a silver-plating layer, is formed on the layer of copper or a copper alloy, copper is diffused into the silver layer and thereby making it difficult for oxygen to pass through the silver layer. As a result, an excellent thermal delamination resistance can be obtained.

### BRIEF DESCRIPTION OF THE DRAWINGS

FIG. 1A is a perspective view showing a plated wire rod according to a first embodiment of the present invention and a transverse cross section thereof,
FIG. 1B is a perspective view showing a plated wire rod according to a second embodiment and a transverse cross section thereof;
FIG. 2 is a perspective view showing a plated wire rod according to a third embodiment of the present invention and a transverse cross section thereof;
FIG. 3 is a schematic cross-sectional view explaining a method of measuring an average thickness of a mixed layer; and
FIG. 4 is a schematic view explaining a method of measuring bending fatigue resistance properties.

### PREFERRED MODE FOR CARRYING OUT THE INVENTION

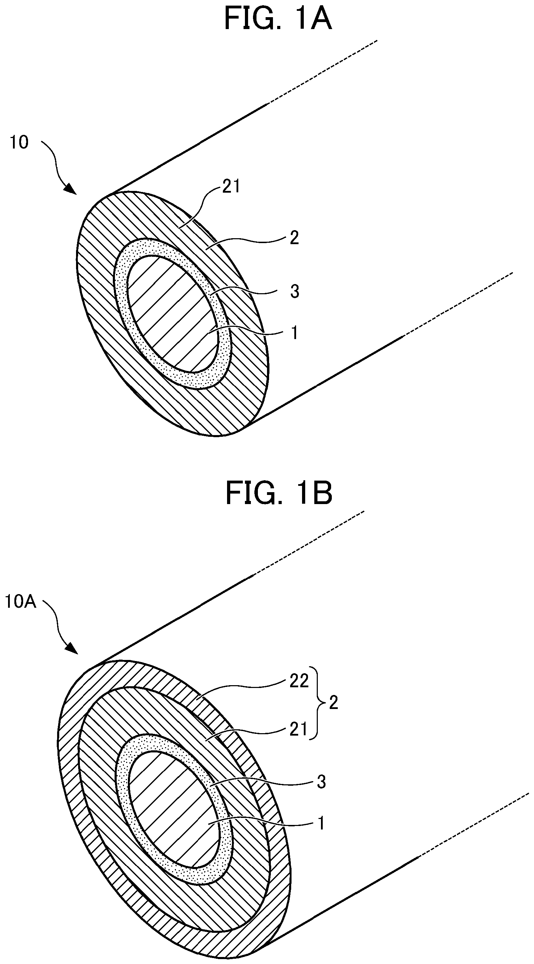

Embodiments of the present invention will now be described with reference to the drawings. FIG. 1A is a perspective view showing a plated wire rod according to a first embodiment and a transverse cross section of the plated wire rod. As shown in FIG. 1A and FIG.1B, the plated wire rod 10 has a wire rod 1, and a surface treatment coating 2 with which the wire rod 1 is coated.

### (Wire Rod)

The wire rod 1 is made of aluminum or an aluminum alloy. The term "aluminum" as used herein refers to a material containing aluminum at 99 mass% or more. The "aluminum alloy" contains aluminum at 50 mass% or more, additive elements other than Al, such as Si, Mg, Fe, Mn, Cu, Ni, and Cr, and unavoidable impurities as the remainder. The unavoidable impurities refer to components which are unavoidably mixed during manufacturing process, in such a trace amount that does not affect the properties. The wire rod is not limited to any particular type, and examples thereof include 1000 series aluminum such as A1070 and A1100, 3000 series alloy such as A3003, 5000 series alloy such as A5005 and A5052, 6000 (Al-Mg-Si) series alloy such as A6061 and A6063, 7000 series alloy such as A7075, and 8000 series alloy such as A8021 and A8079, as specified in JIS H4000:2014. Alternatively, the aluminum alloy material disclosed in WO 2018/012481 or WO 2018/012482 may be used as the wire rod 1. Although the outer diameter of the wire rod is not particularly limited, the outer diameter is, for example, φ 0.02-5.0 mm, and preferably, φ 0.05-5.0 mm. Note that the wire rod is not limited to any particular shape, and examples of the shape include a round shape, a flat shape, a tape shape. In the present specification, the "wire rod" is a generic name denoting wire members and rod members.

### (Surface Treatment Coating)

The surface treatment coating 2 is composed of one or more metal layers. In FIG. 1A, the surface treatment coating 2 is constituted by a single metal layer 21 and formed over the wire rod 1. Here, the surface treatment coating 2 is constituted by a single metal layer or two or more metal layers on a case-by-case basis. In the present invention, in both the case where the surface treatment coating 2 is constituted by a single metal layer and the case where it is composed of two or more metal layers, the metal layer 21 as the metal layer located closest to the wire rod 1 is referred to as the "innermost metal layer". In the case of the plated wire rod 10 shown in FIG. 1A, the metal layer formed over the wire rod 1 is constituted by only one layer, and thus, this metal layer 21 is the innermost metal layer.

The innermost metal layer 21 is made of copper (Cu) or a copper alloy. A preferred average thickness of the innermost metal layer ranges from 0.01 µm to 110 µm. If the average thickness is less than 0.01 µm, pinholes will increase in the innermost metal layer, making it likely that solder wettability and salt water corrosion resistance decrease. On the other hand, even when the innermost metal layer has an increased thickness, the favorable characteristics are maintained. However, if the innermost metal layer is thicker than 110 µm, merits of an Al wire rod, such as lightness in weight and low costs, will be impaired. Therefore, the average thickness of the innermost metal layer is preferably 110 µm or less. The average thickness of the innermost metal layer is preferably 0.01 µm or more and 100 µm or less, more preferably 0.05 µm or more and 50 µm or less, and yet more preferably 0.1 µm or more and 10 µm or less. These are more optimal ranges that enable the characteristics such as the solder wettability and the salt water corrosion resistance and the lightness of the wire rod to be both achieved.

Alternatively, as shown in FIG. 1B, the surface treatment coating 2 may be composed of the innermost metal layer 21 and at least one metal layer 22 formed over the innermost metal layer 21 (e.g., various functional plating layers). Here, when the metal layer 22 as a functional plating layer or the like is to be formed over aluminum or an aluminum alloy, in order to obtain adhesion of the metal layer 22, it is necessary to provide undercoat plating. Representative examples of the undercoat plating include nickel plating and copper plating. In the present invention, the innermost metal layer 21 serves as a copper underlayer to which the metal layer 22 adheres well, and the resultant plated wire rod 10 is excellent in workability and is usable in non-magnetic applications. In addition, even when a metal having oxygen permeability, such as silver, is used as the metal layer 22, the heat resistant adhesion is less likely to be impaired.

The at least one metal layer 22 formed over the innermost metal layer 21 can be a layer made of any metal or alloy selected from the group consisting of nickel (Ni), nickel alloys, cobalt (Co), cobalt alloys, iron (Fe), iron alloys, copper (Cu), copper alloys, tin (Sn), tin alloys, silver (Ag), silver alloys, gold (Au), gold alloys, platinum (Pt), platinum alloys, rhodium (Rh), rhodium alloys, ruthenium (Ru), ruthenium alloys, iridium (Ir), iridium alloys, palladium (Pd), and palladium alloys. The metal or alloy can be appropriately selected, depending on desired characteristics to be imparted. For example, in a case of forming one metal layer 22 or two or more metal layers 22 over the innermost metal layer 21, the wire rod 1 that has undergone at least a surface activation treatment step to be described later is subjected to plating process so that the innermost metal layer 21 of copper or a copper alloy is formed over the wire rod 1. Thereafter, as a coating layer or coating layers for imparting to the plated wire rod 10 a function required for the respective part, one layer or two or more layers are formed by a plating process, each of the layers being made of a metal or an alloy selected from the group consisting of nickel, nickel alloys, cobalt, cobalt alloys, iron, iron alloys, copper, copper alloys, tin, tin alloys, silver, silver alloys, gold, gold alloys, platinum, platinum alloys, rhodium, rhodium alloys, ruthenium, ruthenium alloys, iridium, iridium alloys, palladium, and palladium alloys. In this way, the plated wire rod (plated member) 10 that is excellent in long-term reliability can be produced. Alternatively, the wire rod 1 that has undergone at least the surface activation treatment step is subjected to a plating process so that one layer or two or more layers are formed over the wire rod 1, each of the layers being made of a metal or an alloy selected from the group consisting of nickel, nickel alloys, cobalt, cobalt alloys, iron, iron alloys, copper, copper alloys, tin, tin alloys, silver, silver alloys, gold, gold alloys, platinum, platinum alloys, rhodium, rhodium alloys, ruthenium, ruthenium alloys, iridium, iridium alloys, palladium, and palladium alloys. Also in this way, the single metal layer 22 or two or more metal layers 22 can be formed over the wire rod 1. Thus, in the former case, the innermost metal layer 21 is composed of copper or the copper alloy obtained by way of the surface activation treatment step and copper or the copper alloy provided by way of the subsequent plating process. In the latter case, the innermost metal layer 21 is constituted by copper or the copper alloy obtained by way of the surface activation treatment step. In particular, the surface treatment coating 2 is preferably composed of at least two metal layers 21 and 22 including: the innermost metal layer 21 formed for the purpose of improving, for example, thermal delamination resistance with respect to the wire rod 1; and the metal layer 22 as a coating layer for imparting a function. For example, the surface treatment coating 2 composed of the innermost metal layer 21 and the metal layer 22 is formed in such a manner that after formation of a copper layer as the innermost metal layer 21 over the wire rod 1, a gold- plating layer as the metal layer 22 for imparting a function is formed over the innermost metal layer 21. The formation of the metal layer 22 over the innermost metal layer 21 makes it possible to provide a plated wire rod (plated member) 10A having an excellent salt water corrosion resistance. Although the method of forming the metal layers 21 and 22 is not particularly limited, the metal layers 21 and 22 are preferably formed by a wet plating method.

### [Method of Measuring Average Thickness of Innermost Metal Layer and Metal Layer]

An average thickness of the innermost metal layer 21 and an average thickness of the metal layer 22 can be determined in the following manner: a transverse cross section of the plated wire rod is formed by a cross section forming process, such as cross section polishing after embedment in resin, FIB process, and further, ion milling or cross section polishing; the transverse cross section is observed with an optical microscope or a SEM; and the average of thicknesses measured at a plurality of locations in an arbitrary area.

### (Characteristic Features of the Present Invention)

The present invention has a characteristic feature in which a boundary region between the wire rod 1 made of aluminum or an aluminum alloy and the surface treatment coating 2 is controlled to have an appropriate structure, and more specifically, in which a mixed layer 3 is present in the boundary region between the wire rod 1 and the surface treatment coating 2, the mixed layer 3 containing a metal component of the wire rod 1, a metal component of the surface treatment coating 2, and an oxygen component.

Meanwhile, aluminum, which is used in the present invention, is a base metal having a high ionization tendency. Therefore, to form a metal plating layer on aluminum, it is common to perform a zinc substitution process, that is, the so-called zincate treatment. According to the conventional zincate treatment, a zinc-containing layer present between an aluminum material and a surface treatment coating has a thickness of about 100 nm, for example. The presence of zinc of the zinc-containing layer sometimes causes delamination of the plating when a change in temperature or heating takes place. Further, if zinc is diffused in a surface treatment coating so as to appear in a surface layer of the surface treatment coating, a problem arises in that contact resistance is increased. This problem leads to various disadvantages such as a decrease in the solder wettability and a decrease in the salt water corrosion resistance. As a result, there are cases where the characteristics of the plated wire rod are deteriorated due to use and the long-term reliability is impaired.

It is therefore desirable to allow no zinc-containing layer to be present between the wire rod 1 and the surface treatment coating 2. However, according to the conventional technique to form coating layers, without the zinc-containing layer (in particular, a zincate treatment layer), it has been difficult to form, by a plating process, a surface treatment coating having a sufficient thermal delamination resistance over the wire rod 1, in particular, on the wire rod 1 made of a base metal having a high ionization tendency.

In view of the above circumstances, the present inventors have conducted extensive studies to make the following findings. For example, prior to formation of a plating coating, the surface of the wire rod 1 is subjected to the surface activation treatment, whereby the mixed layer 3 containing a metal component of the wire rod 1, a metal component of the surface treatment coating 2, and an oxygen component can be formed in the boundary region between the wire rod 1 and the surface treatment coating 2. That is, in the present invention, the mixed layer 3 containing a metal component (e.g., Al) of the wire rod 1, a metal component (e.g., Cu) of the surface treatment coating 2, and an oxygen component (O) is present between the wire rod 1 and the surface treatment coating 2. The oxygen component of the mixed layer 3 binds to metal atoms (e.g., aluminum atoms) constituting the wire rod 1, and to metal atoms (e.g., copper atoms) constituting the innermost metal layer 21 of the surface treatment coating 2. As a result, the surface treatment coating 2 can be easily formed over the wire rod 1 even without a particularly large mechanical anchoring effect, i.e., the so-called anchoring effect given thereto, and the surface treatment coating 2 has a sufficient thermal delamination resistance with respect to the wire rod 1. Further, the mixed layer 3 functions as a diffusion preventing layer that prevents diffusion of the metal component of the wire rod 1 and the metal component of the surface treatment coating 2. Thus, the plated wire rod 10 of the present invention is excellent also in the long-term reliability such as heat resistance and salt water corrosion resistance. For example, the present invention can provide a plated wire rod which exhibits an excellent salt water corrosion resistance in a corrosion test in which a salt water spray test using 5 mass% salt water is continued for eight hours. Further, since the mixed layer 3 functions as a diffusion preventing layer, even in a case where heat treatment is performed after plating, the metal component of the wire rod 1 and the metal component of the surface treatment coating 2 are prevented from forming an intermetallic compound. Therefore, degradation of fatigue resistance properties which can be caused by such an intermetallic compound is inhibited. Thus, the wire rod 1 is excellent in the fatigue resistance properties. In addition, since no intermetallic compound is formed, the resultant aluminum wire rod is soft. Note that in the present specification, the term "soft aluminum wire rod" refers to the O-type material specified in JIS H0001, which is soft by having been annealed, while the term "hard aluminum wire rod" refers to the H-type material, F-type material, W-type material, and T-type material specified in JIS H0001. The wire rod 1 may be soft or hard.

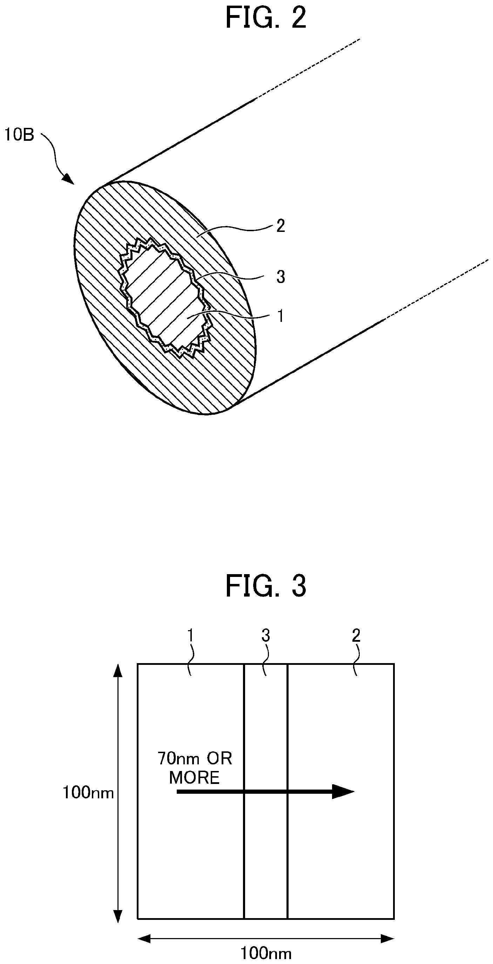

The mixed layer 3 contains the metal component (e.g., Al) of the wire rod 1, the metal component (e.g., Cu) of the surface treatment coating 2, and the oxygen component (O), and is formed in the boundary region between the wire rod 1 and the surface treatment coating 2. Although FIGS. 1(A) and 1(B) each show a case where the wire rod 1 is completely coated with the mixed layer 3, in the present invention, the wire rod 1 may be completely or partially coated with the mixed layer 3, or the wire rod 1 may be dotted with the mixed layer 3. As in the wire rods 10 and 10A shown in FIGS. 1(A) and 1(B), respectively, the interface between the wire rod 1 and the mixed layer 3 and the interface between the surface treatment coating 2 and the mixed layer 3 may be a smooth surface without unevenness. Alternatively, as in a plated wire rod 10B shown in FIG. 2, the interface between the wire rod 1 and the mixed layer 3 and the interface between the surface treatment coating 2 and the mixed layer 3 may be uneven. In many cases, the interface between the wire rod 1 and the mixed layer 3 and the interface between the surface treatment coating 2 and the mixed layer 3 actually form a curved surface having a minute surface unevenness, and not a curved smooth surface as shown in FIGS. 1(A) and 1(B) .

For example, the mixed layer 3 is a region determined in the following manner. In an observation of a cross section of the plated wire rod 10, a linear analysis using a scanning transmission electron microscopy-energy dispersive X-ray spectroscopy method (STEM-EDX) is performed across an area from a portion of the wire rod 1 to a portion of the surface treatment coating 2 so as to obtain a detected intensity profile of components (Al, Cu, O) of the plated wire rod 10, and from the detected intensity profile, a region as the mixed layer 3 is specified in which a detected intensity of Cu as the main component of the surface treatment coating 2 is 0.5 to 2.0 times a detected intensity of Al as the main component of the wire rod 1 (the detected intensity of the main component of the surface treatment coating 2 / the detected intensity of the main component of the wire rod 1 = 0.5 to 2.0), and in which a detected intensity of the oxygen component (O) is 0.10 times or more the sum of the detected intensity of the main component (Al) of the wire rod 1 and the detected intensity of the main component (Cu) of the surface treatment coating 2 (the detected intensity of the oxygen component / (the detected intensity of the main component of the wire rod 1 + the detected intensity of the main component of the surface treatment coating 2) ≥ 0.10).

In the present invention, the mixed layer 3 has an average thickness preferably ranging from 1.00 nm to 40 nm, as measured at a transverse cross section of the plated wire rod 10. If the average thickness is greater than 40 nm, the bonding strength between the metal component (e.g., Al) of the wire rod 1, the metal component (e.g., Cu) of the surface treatment coating 2, and the oxygen component (O) in the mixed layer 3 will be weaker than the bonding strength between the wire rod 1 and the oxygen component of the mixed layer 3 and the bonding strength between the surface treatment coating 2 and the oxygen component of the mixed layer 3. Consequently, delamination will occur inside the mixed layer 3, and the thermal delamination resistance of the surface treatment coating 2 with respect to the wire rod 1 will be likely to decrease. On the other hand, if the average thickness is less than 1.00 nm, the bonding strength between the wire rod 1 and the oxygen component of the mixed layer 3 and the bonding strength between the surface treatment coating 2 and the oxygen component of the mixed layer 3 will be exerted insufficiently. Consequently, the thermal delamination resistance of the surface treatment coating 2 with respect to the wire rod 1 will be likely to decrease. A preferable range of the average thickness of the mixed layer 3 is from 5 nm to 30 nm. This is a more preferred range enabling achievement of both the thermal delamination resistance and the fatigue resistance properties. Regarding the thickness of the mixed layer 3 of the present invention that is 1.00 nm, the significant digits up to the second decimal place do not correspond to the resolution of the electron microscope, but are rounded off from the third decimal place in the operation of calculating the average value.

The average thickness of the mixed layer 3 can be determined in the following manner: a transverse cross section of the plated wire rod is formed by a cross section forming process, such as cross section polishing after embedment in resin, FIB process, and further, ion milling or cross section polisher; thicknesses at a plurality of locations in an arbitrary observation area are measured by STEM-EDX or the like; and the average value of the thicknesses is calculated.

In an observation of a transverse cross section of the plated wire rod 10, a linear analysis using STEM-EDX is performed across an area from a portion of the wire rod 1 to a portion of the surface treatment coating 2 so as to obtain a detected intensity profile of components of the plated wire rod 10, and from the detected intensity profile, a region is specified in which the detected intensity of the main component of the surface treatment coating 2 is 0.5 to 2.0 times the detected intensity of the main component of the wire rod 1, and in which the detected intensity of the oxygen component is 0.10 times or more the sum of the detected intensity of the main component of the wire rod 1 and the detected intensity of the main component of the surface treatment coating 2. The specified region (i.e., the region of the mixed layer 3) preferably has a length ranging from 1.00 nm to 40 nm in the layer-stacking direction of the surface treatment coating 2.

### (Method of Producing Plated Wire Rod)

Several embodiments of a method of producing the plated wire rod according to the present invention will be described below.

For example, to produce a plated wire rod having the layered cross-sectional structure shown in FIG. 1A, it is suitable to subject a wire rod of aluminum and an aluminum alloy (wire rod 1) to an electrolytic degreasing step, a surface activation treatment step, and a surface treatment coating forming step in order. It is preferable to perform a water washing step as necessary between these steps. Aluminum and the aluminum alloy have been described earlier. The aluminum alloy material is not particularly limited. For example, an extruded material, an ingot material, a hot rolled material, or a cold rolled material can be selectively used as appropriate, depending on the purpose of use.

### (Electrolytic Degreasing Step)

In the electrolytic degreasing step, the wire rod 1 undergoes an electrolytic degreasing treatment. For example, a step is exemplified in which the wire rod 1 as a cathode is immersed in an alkaline degreasing bath containing 20-200 g/L sodium hydroxide (NaOH), and is electrolytically degreased at a current density of 2.5-5.0 A/dm² and at a bath temperature of 20-70°C for a treatment period of 10-100 seconds.

### (Surface Activation Treatment Step)

Following the electrolytic degreasing step, the surface activation treatment step is performed. The surface activation treatment step is a step in which a novel activation treatment that is different from the conventional activation treatment is performed, and is the most important step in the method of producing the plated wire rod of the present invention.

Specifically, according to the conventional technique to form coating layers, without the zinc-containing layer (in particular, the zincate treatment layer), it has been difficult to form, by plating process, a surface treatment coating having a sufficient thermal delamination resistance over the wire rod 1 made of aluminum or an aluminum alloy that is a base metal having a particularly high ionization tendency. In contrast, it is presumed that by performing the surface activation treatment of the present invention, the same metal atoms as the metal atoms (copper atoms) constituting the innermost metal layer 21, which is to be subsequently formed over the wire rod 1, are allowed to form crystal nuclei or a thin layer on the wire rod 1 prior to the formation of the innermost metal layer 21. The mixed layer 3 is formed at the interface between the crystal nuclei or the thin layer and the wire rod 1. Consequently, Al as the metal component of the wire rod 1 and Cu as the metal component of the surface treatment coating 2 are each enabled to bind to the oxygen component of the mixed layer 3. As a result, even without forming a zinc-containing layer containing zinc as a main component by the zincate treatment or the like, the surface treatment coating 2 can be easily formed over the wire rod 1, and the produced plated wire rod includes the surface treatment coating 2 having a sufficient thermal delamination resistance with respect to the wire rod 1. Note that the innermost metal layer 21 may be formed by way of only the surface activation treatment step.

The surface activation treatment step is preferably performed in the following manner. The surface of the wire rod 1 that has been subjected to the electrolytic degreasing treatment is treated with an acid solution containing at least one acid selected from the group consisting of sulfuric acid, nitric acid, hydrochloric acid, hydrofluoric acid, phosphoric acid, hydrobromic acid, hydroiodic acid, acetic acid, and oxalic acid at a concentration of 10-500 mL/L in total, and with an activation treatment solution containing at least one copper compound selected from the group consisting of copper sulfate, copper nitrate, copper chloride, and copper sulfamate at a content of 0.01-500 g/L in terms of metallic copper, at a treatment temperature of 20-60°C and a current density of 0.1-20 A/dm² for a treatment period of 1-100 seconds. It is preferable that the activation treatment solution contains oxygen in a proportion described as a dissolved oxygen concentration of 3-100 ppm because this solution can enhance efficiency in formation of the mixed layer 3. As a result of this surface activation treatment, the copper metal deposited on the surface of the wire rod 1 forms a coating layer having a thickness of, for example, 0.5 µm or less.

### (Surface Treatment Coating Forming Step)

The surface treatment coating forming step is performed after the surface activation treatment step. In the surface treatment coating forming step, the surface treatment coating 2 constituted by the innermost metal layer 21 alone may be formed. Alternatively, depending on a desired characteristic (function) to be imparted to the plated wire rod 10, at least one metal layer 22 other than the innermost metal layer 21 may be formed over the innermost metal layer 21 so that the surface treatment coating 2 is composed of at least two metal layers 21 and 22 including the lowermost metal layer 21.

### [Step of Forming Innermost Metal Layer]

The innermost metal layer 21 is made of copper (Cu) or a copper alloy. The innermost metal layer 21 can be formed using a plating solution containing copper (Cu), by a wet plating method, i.e., electrolytic plating or electroless plating. Table 1 shows, as an example, a plating bath composition and plating conditions for forming the innermost metal layer 21 by copper (Cu) plating.

**[Table 1]**

| Copper Plating | | | |
|---|---|---|---|
| Plating Bath Composition | | Bath Temperature (°C) | Current Density (A/dm²) |
| Components | Concentration (g/L) | | |
| CuSO₄·5H₂O | 250 | 40 | 6 |
| H₂SO₄ | 50 | | |
| NaCl | 0.1 | | |

### [Step of Forming Metal layer other than Innermost Metal Layer]

To form the metal layer(s) 22 other than the innermost metal layer 21 included in the metal layers 21 and 22 constituting the surface treatment coating 2, each metal layer 22 can be formed by a wet plating method, i.e., electrolytic plating or electroless plating, depending on the purpose of imparting a characteristic (function) to the plated wire rod. Tables 2 to 11 respectively show, as an example, a plating bath composition and plating conditions for forming the metal layer by nickel (Ni) plating, cobalt (Co) plating, iron (Fe) plating, tin (Sn) plating, silver (Ag) plating, silver (Ag)-tin (Sn) plating, silver (Ag)-palladium (Pd) plating, gold (Au) plating, palladium (Pd) plating, and rhodium (Rh) plating. In a case where the metal layer 22 is constituted by copper plating, it is formed in the same manner as shown in Table 1.

**[Table 2]**

| Nickel Plating | | | |
|---|---|---|---|
| Plating Bath Composition | | Bath Temperature (°C) | Current Density (A/dm²) |
| Components | Concentration (g/L) | | |
| Ni(SO₃NH₂)₂·4H₂O | 500 | 50 | 10 |
| NiCl₂ | 30 | | |
| H₃BO₃ | 30 | | |

**[Table 3]**

| Cobalt Plating | | | |
|---|---|---|---|
| Plating Bath Composition | | Bath Temperature (°C) | Current Density (A/dm²) |
| Components | Concentration (g/L) | | |
| CO(SO₃NH₂)₂·4H₂O | 500 | 50 | 10 |
| CoCl₂ | 30 | | |
| H₃BO₃ | 30 | | |

**[Table 4]**

| Iron Plating | | | |
|---|---|---|---|
| Plating Bath Composition | | Bath Temperature (°C) | Current Density (A/dm²) |
| Components | Concentration (g/L) | | |
| FeCl₂·4H₂O | 300 | 90 | 6.5 |
| CaCl₂ | 335 | | |

**[Table 5]**

| Tin Plating | | | |
|---|---|---|---|
| Plating Bath Composition | | Bath Temperature (°C) | Current Density (A/dm²) |
| Components | Concentration (g/L) | | |
| SnSO₄ | 80 | 30 | 2 |
| H₂SO₄ | 80 | | |

**[Table 6]**

| Silver Plating | | | |
|---|---|---|---|
| Plating Bath Composition | | Bath Temperature (°C) | Current Density (A/dm²) |
| Components | Concentration (g/L) | | |
| AgCN | 50 | 30 | 1 |
| KCN | 100 | | |
| K₂CO₃ | 30 | | |

**[Table 7]**

| Silver-Tin Alloy Plating | | | |
|---|---|---|---|
| Plating Bath Composition | | Bath Temperature (°C) | Current Density (A/dm²) |
| Components | Concentration (g/L) | | |
| AgCN | 10 | 40 | 1 |
| K₂Sn(OH)₆ | 80 | | |
| KCN | 100 | | |
| NaOH | 50 | | |

**[Table 8]**

| Silver-Palladium Alloy Plating | | | |
|---|---|---|---|
| Plating Bath Composition | | Bath Temperature (°C) | Current Density (A/dm²) |
| Components | Concentration (g/L) | | |
| KAg(CN)₂ | 20 | 40 | 0.5 |
| PdCl₂ | 25 | | |
| K₄O₇P₂ | 60 | | |
| KSCN | 150 | | |

**[Table 9]**

| Gold Plating | | | |
|---|---|---|---|
| Plating Bath Composition | | Bath Temperature (°C) | Current Density (A/dm²) |
| Components | Concentration (g/L) | | |
| KAu(CN)₂ | 14.6 | 40 | 1 |
| C₆H₈O₇ | 150 | | |
| K₂C₆H₄O₇ | 180 | | |

**[Table 10]**

| Palladium Plating | | | |
|---|---|---|---|
| Plating Bath Composition | | Bath Temperature (°C) | Current Density (A/dm²) |
| Components | Concentration (g/L) | | |
| Pd(NH₃)₂Cl₂ | 45g/L | 60 | 5 |
| NH₄OH | 90ml/L | | |
| (NH₄)₂SO₄ | 50g/L | | |
| Brightening Agent "Palla Sigma" (Matsuda Sangyo Co., Ltd.) | 10ml/L | | |

**[Table 11]**

| Rhodium Plating | | |
|---|---|---|
| Plating Solution | Bath Temperature | Current Density |
| RHODEX (Trade name, manufactured by ELECTROPLATING ENGINEERS OF JAPAN Ltd.) | 50°C | 1.3A/dm² |

The layered structure of the surface treatment coating 2 can be changed in various ways, in each of which ways the innermost metal layer 21 as described above is appropriately combined with one metal layer 22 or two or more metal layers 22 formed over the innermost metal layer 21, depending on the application.

To make the wire rod 1 (conductor) have a desired wire diameter and desired hardness, a wiredrawing step may be carried out after the surface treatment coating forming step, i.e., after the plating process. If an unannealed rough drawing wire is subjected to cold drawing until the diameter of the wire decreases to a desired wire diameter without undergoing annealing in the middle, the tensile strength of the wire increases excessively, the maximum degree of elongation of the wire is lowered below an allowable limit. Further, the conductivity of the wire may also decrease. Therefore, from the viewpoint of the ease of a wiredrawing operation, in the case of a hard aluminum wire rod that has been plated, the wiredrawing step preferably includes intermediate annealing in which the wire rod is annealed in the middle of the wiredrawing, or final annealing in which the wire rod is annealed after the wiredrawing. The wiredrawing step is not particularly limited, and examples thereof will be described below.

### <Wiredrawing Step>

The wiredrawing step is performed as cold working. The cold working may be preceded by a pretreatment step, and may be followed by temper annealing. Further, depending on a desired wire diameter and desired hardness of the conductor, the cold working may be preceded by temper annealing. The wiredrawing step will be described in detail below.

A method of cold working may be appropriately selected, depending on the shape of the aluminum alloy material of interest (wire rod member, plate-like member, strip, foil, etc.). Examples of the method of cold working include cassette roller dies, groove roller rolling, round wire rolling, drawing with dies or the like, and swaging. Various conditions of the processes described above (type of lubricating oil, processing speed, processing heat generation, etc.) may be appropriately adjusted within a known range.

A pretreatment step may be performed prior to the cold working. Examples of the pretreatment step include shot peening, extrusion, swaging, skin pass, rolling, and recrystallization method. Various conditions in the above processes (processing speed, processing heat generation, temperature, etc.) may be appropriately adjusted within a known range.

Further, in order to make the wiredrawing operation easy and to obtain a wire rod having desired hardness, temper annealing may be performed after the cold working, for the purpose of releasing residual stresses and increasing elongation. The plated aluminum wire rod, which has been subjected to annealing and given a desired tensile strength, is then cooled. Annealing may be of an electric resistance heating type, an induction heating type, a continuous type using a continuous-type furnace (e.g., a convection type or a radiant heat type) or a non-continuous type using a batch-type furnace. In the case of the continuous type, for example, the annealing temperature is 230°C to 650°C, the annealing time is about 5 minutes to 0.01 second. In general, the temperature and the time are suitably adjusted within a range where a desired tensile strength is obtainable, while the whole process steps are taken into consideration. In the case of the non-continuous type, for example, the annealing temperature is 200°C to 400°C, the maintaining time is about 30 minutes to about 24 hours. Similarly to the continuous type, the temperature and the time are suitably adjusted within a range where a desired tensile strength is obtainable, while the whole process steps are taken into consideration.

The plated wire rod of the present invention can be used as a variety of products such as cables, electric wires, high frequency signal transmission conductors, coils, wire harnesses for automobiles and aircrafts, voice coils, motor windings, spring members, enameled wires, leads, etc.

In the foregoing, several embodiments of the present invention have merely been described. Various modifications can be made within the scope of the claims.

### EXAMPLES

In the following, the present invention will be described in more detail with reference to examples. Note that the present invention is not limited to the following examples.

### (Inventive Examples 1 to 40)

As each of Inventive Examples 1 to 37, an aluminum wire rod (wire rod 1) shown in Table 12 and having an outer diameter of φ 0.2 mm was used. As each of Inventive Examples 38 and 39, an aluminum wire rod having an outer diameter of φ 0.5 mm was used. As Inventive Example 40, an aluminum wire rod having an outer diameter of φ 0.1 mm was used. Each of the wire rods of the Inventive Examples was subjected to the electrolytic degreasing treatment under the conditions described above, and then, to the surface activation treatment. In all of Inventive Examples 1 to 40, the surface activation treatment was performed using: an acid solution containing at least one acid selected from sulfuric acid, nitric acid, hydrochloric acid, hydrofluoric acid, phosphoric acid, hydrobromic acid, hydroiodic acid, acetic acid, and oxalic acid at a concentration of 10-500 mL/L in total; and an activation treatment solution containing at least one copper compound selected from copper sulfate, copper nitrate, copper chloride, and copper sulfamate (copper concentration: 0.01-500 g/L in terms of metallic copper), at a treatment temperature of 10-60°C and at a current density of 0.05-20 A/dm² for a treatment period of 0.5-150 seconds. Thereafter, in Inventive Examples 1 to 6 and 10 to 16, the above-described surface treatment coating forming process was performed so that a surface treatment coating 2 constituted by an innermost metal layer 21 was formed, whereby a plated wire rod 10 of the present invention was produced. In Inventive Examples 17 to 37, the above-described surface treatment coating forming process was performed so that a surface treatment coating 2 composed of an innermost metal layer 21 and a coating metal layer 22 formed over the innermost metal layer 21 was formed, whereby a plated wire rod 10A of the present invention was produced. In Inventive Example 38, the aluminum wire rod with φ 0.5 mm dimeter that had undergone the surface activation treatment was subjected to the surface treatment coating forming process so that an innermost metal layer 21 was formed over the aluminum wire rod. Thereafter, the wire rod was subjected to the above-described wiredrawing step by cold working so that the outer diameter decreased to φ 0.1 mm. In Inventive Example 39, after the surface activation treatment, the surface treatment coating forming process described above was performed to form an innermost metal layer 21. Thereafter, the wire rod was subjected to the wiredrawing step so that the diameter decreased from φ 0.5 mm to φ 0.1 mm, and then, to an annealing step at 250°C for five hours. In Inventive Example 40, the aluminum wire rod with φ 0.1 mm diameter that had undergone the surface activation treatment was subjected to the surface treatment coating forming process described above so that an innermost metal layer 21 was formed.

### (Conventional Example 1)

As Conventional Example 1, an aluminum wire shown in Table 12 (having an outer diameter of φ 0.2 mm) was subjected to the electrolytic degreasing treatment under the conditions described above. The aluminum wire then underwent the conventional zinc substitution process (zincate treatment) so that a zinc-containing layer having a thickness of 110 nm was formed. Thereafter, a Cu-plating layer having the thickness shown in Table 12 was formed by the surface treatment coating forming process described above, without performing the surface activation treatment, whereby a plated wire rod was produced.

### (Conventional Example 2)

As Conventional Example 2, a copper-clad aluminum member was used which was provided with a 10 µm-thick copper coating layer and had an outer diameter of φ 0.2 mm.

### (Conventional Example 3)

As Conventional Example 3, like Conventional Example 1, an aluminum wire shown in Table 12 (having an outer diameter of φ 0.2 mm) was subjected to the electrolytic degreasing treatment under the conditions described above. Then, the wire underwent the conventional zinc substitution process (zincate treatment) so that a zinc-containing layer having a thickness of 110 nm was formed. Thereafter, the wire was subjected to the surface treatment coating forming process described above, without undergoing the surface activation treatment, so that a surface treatment coating composed of two metal layers (namely, a Cu-plating layer and an Ag-plating layer) having the thicknesses shown in Table 13 was formed, whereby a plated wire rod was produced.

### (Conventional Example 4)

As Conventional Example 4, the same member as in Conventional Example 2 was subjected to the above-described surface treatment coating forming process so that a surface treatment coating composed of two metal layers (namely, a Cu-plating layer and an Ag-plating layer) having the thickness shown in Table 13 was formed, whereby a plated wire rod was produced.

### (Conventional Example 5)

As Conventional Example 5, an aluminum wire having an outer diameter of φ 0.5 mm was subjected to the electrolytic degreasing treatment under the conditions described above. The aluminum wire then underwent the conventional zinc substitution process (zincate treatment) so that a zinc-containing layer having a thickness of 110 nm was formed. Thereafter, a Cu-plating layer having the thickness shown in Table 14 was formed by the surface treatment coating forming process described above, without performing the surface-activation treatment, whereby a plated wire rod was produced. The plated wire rod was then subjected to the wiredrawing step described above so that the diameter decreased to φ 0.1 mm.

### (Conventional Example 6)

As Conventional Example 6, the same plated wire rod as in Conventional Example 5 that had underwent the wiredrawing step was subjected to an annealing step in which the plated wire rod was maintained at 250°C for five hours.

### (Conventional Example 7)

An aluminum wire having an outer diameter of φ 0.1 mm was subjected to the electrolytic degreasing treatment under the conditions described above. The aluminum wire then underwent the conventional zinc substitution process (zincate treatment) so that a zinc-containing layer having a thickness of 110 nm was formed. Thereafter, a Cu-plating layer having the thickness shown in Table 14 was formed by the surface treatment coating forming process described above, without performing the surface activation treatment, whereby a plated wire rod was produced.

### (Conventional Example 8)

As conventional Example 8, a Cu-coated aluminum wire having a metal layer of the type and thickness shown in Table 14 was produced by a known cladding process (Japanese Unexamined Patent Application, Publication No. 2010-280989). The aluminum wire was subjected to the wiredrawing step described above in which the wire underwent a wiredrawing operation so that the diameter decreased from φ 9.5 mm to φ 0.1 mm.

### (Conventional Example 9)

An aluminum wire member having an outer diameter of φ 9.5 mm was subjected to a known cladding process so that a Cu-coated aluminum wire was produced which had a metal layer of the type and thickness shown in Table 14. The aluminum wire was subjected to a wiredrawing operation so that the outer diameter decreased to φ 2.6 mm, and thereafter, was annealed at 250°C for five hours. The aluminum wire then underwent the wiredrawing operation again so that the outer diameter decreased to φ 0.1 mm.

### (Conventional Example 10)

An aluminum wire member having an outer diameter of φ 9.5 mm was subjected to a known cladding process so that a Cu-coated aluminum wire was produced which had a metal layer of the type and thickness shown in Table 14. The aluminum wire was subjected to a wiredrawing operation so that the outer diameter decreased to φ 0.1 mm, and thereafter, was annealed at 250°C for five hours.

Tables 12 to 14 show the types of the aluminum wire members (wire rods 1), average thicknesses (nm) of the mixed layers 3, and the types of metal compounds constituting the innermost metal layer 21 and the metal layer 22, and average thicknesses of the layers 21 and 22 of the Inventive Examples and the Conventional Examples. The innermost metal layer 21 and the metal layer 22 constituting the surface treatment coating 2 were formed under forming conditions corresponding to the plating conditions shown in Table 1 to Table 11. The average thickness of the mixed layer 3 is determined by [Method of Measuring Average Thickness of Mixed Layer] below. The average thickness of the innermost metal layer 21 and the average thickness of the metal layer 22 were determined by [Method of Measuring Average Thicknesses of Innermost Metal Layer and Metal Layer] below.

### [Method of Measuring Average Thickness of Mixed Layer]

The average thickness of the mixed layer 3 was determined by the following method. FIG. 3 is a schematic cross-sectional view illustrating a method of measuring the average thickness of the mixed layer. First, at an arbitrary point of the wire rod 1, five points forming a straight line with an interval of 50 µm are designated at two different locations. Focused ion beam (FIB) process is performed at each of the ten points to form a transverse cross section of the plated wire rod 10 (cross section perpendicular to the axial direction). In an observation of the formed transverse cross section (cross section perpendicular to the axial direction), a surface analysis using a STEM-EDX (STEM with sphere aberration correction by JEM-ARM 200 Thermal FE manufactured by JEOL Ltd.) is performed in an area of 100 nm × 100 nm, at a resolution of 1 nm/pixel or higher such that a boundary region between the wire rod 1 and the surface treatment coating 2 is substantially centered (see FIG. 3). By substantially centering the boundary region, the wire rod 1, the mixed layer 3, and the surface treatment coating 2 are observed in the observation field of view having an area of 100 nm × 100 nm described above. Next, in a central portion of a composition mapping image obtained by the surface analysis, a linear analysis is performed across a range of 70 nm or more from a portion of the wire rod 1 to a portion of the surface treatment coating 2 in the layer-stacking direction of the surface treatment coating 2 (a radial direction of the wire rod 1), whereby a detected intensity profile of the components (Al, Cu, O) of the plated wire rod 10 is obtained. From the detected intensity profile obtained in this manner, a region is specified in which the detected intensity of Cu as the main component of the surface treatment coating 2 is 0.5 to 2.0 times the detected intensity of Al as the main component of the wire rod 1, and in which the detected intensity of the oxygen component (O) is 0.10 times or more the sum of the detected intensity of the main component (Al) of the wire rod 1 and the detected intensity of the main component (Cu) of the surface treatment coating 2, and a length of the specified region in the layer-stacking direction of the surface treatment coating 2 (a radial direction of the wire rod 1) is determined. The average value of the lengths determined at the ten points was defined as the average thickness of the mixed layer 3. The results are shown in Tables 12 to 14. In the tables, the significant digits up to the second decimal place do not correspond to the resolution of the electron microscope, but are rounded off from the third decimal place in the operation of calculating the average value of the ten points.

### [Method of Measuring Average Thicknesses of Innermost Metal Layer and Metal Layer]

The average thickness of the innermost metal layer 21 and the average thickness of the metal layer 22 were determined by the following method. A transverse cross section of the plated wire rod was formed by FIB process, and observed by a SEM so that thicknesses of five locations were measured. The average value of the thicknesses was calculated.

**[Table 12]**

| | Type of Wire Rod 1 | Mixed Layer 3 | Surface Treatment Coating 2 | |
|---|---|---|---|---|
| | | Average Thickness (nm) | Innermost Metal Layer 21 | |
| | | | Metal Species | Average Thickness (µm) |
| Inventive Example 1 | A6063 | 0.88 | Cu | 5 |
| Inventive Example 2 | A6063 | 1.3 | Cu | 5 |
| Inventive Example 3 | A6063 | 6.5 | Cu | 5 |
| Inventive Example 4 | A6063 | 29 | Cu | 5 |
| Inventive Example 5 | A6063 | 33 | Cu | 5 |
| Inventive Example 6 | A6063 | 42 | Cu | 5 |
| Inventive Example 7 | A6063 | 10 | Cu | 0.02 |
| Inventive Example 8 | A6063 | 10 | Cu | 0.08 |
| Inventive Example 9 | A6063 | 10 | Cu | 0.12 |
| Inventive Example 10 | A6063 | 10 | Cu | 8 |
| Inventive Example 11 | A6063 | 10 | Cu | 14 |
| Inventive Example 12 | A6063 | 10 | Cu | 55 |
| Inventive Example 13 | A6063 | 10 | Cu | 101 |
| Inventive Example 14 | A6063 | 10 | Cu | 5 |
| Inventive Example 15 | A5005 | 10 | Cu | 5 |
| Inventive Example 16 | A1070 | 10 | Cu | 5 |
| Conventional Example 1 | A6063 | 17.5 | Cu | 5 |
| Conventional Example 2 | A6063 | | Cu | 10 |

**[Table 13]**

| | Type of Wire Rod 1 | Mixed Layer 3 | Surface Treatment Coating 2 | | | |
|---|---|---|---|---|---|---|
| | | Average Thickness (nm) | Innermost Metal Layer 21 | | Metal Layer 22 | |
| | | | Metal Species | Average Thickness (µm) | Metal Species | Average Thickness (µm) |
| Inventive Example 17 | A6063 | 0.88 | Cu | 1 | Ag | 1 |
| Inventive Example 18 | A6063 | 1.3 | Cu | 1 | Ag | 1 |
| Inventive Example 19 | A6063 | 6.5 | Cu | 1 | Ag | 1 |
| Inventive Example 20 | A6063 | 29 | Cu | 1 | Ag | 1 |
| Inventive Example 21 | A6063 | 33 | Cu | 1 | Ag | 1 |
| Inventive Example 22 | A6063 | 42 | Cu | 1 | Ag | 1 |
| Inventive Example 23 | A6063 | 10 | Cu | 0.02 | Ag | 1 |
| Inventive Example 24 | A6063 | 10 | Cu | 0.08 | Ag | 1 |
| Inventive Example 25 | A6063 | 10 | Cu | 0.12 | Ag | 1 |
| Inventive Example 26 | A6063 | 10 | Cu | 8 | Ag | 1 |
| Inventive Example 27 | A6063 | 10 | Cu | 14 | Ag | 1 |
| Inventive Example 28 | A6063 | 10 | Cu | 55 | Ag | 1 |
| Inventive Example 29 | A6063 | 10 | Cu | 101 | Ag | 1 |
| Inventive Example 30 | A5005 | 10 | Cu | 1 | Ag | 1 |
| Inventive Example 31 | A1070 | 10 | Cu | 1 | Ag | 1 |
| Inventive Example 32 | A6063 | 10 | Cu | 1 | Ag | 1 |
| Inventive Example 33 | A6063 | 10 | Cu | 1 | Fe | 1 |
| Inventive Example 34 | A6063 | 10 | Cu | 1 | Au | 0.1 |
| Inventive Example 35 | A6063 | 10 | Cu | 1 | Sn | 2 |
| Inventive Example 36 | A6063 | 10 | Cu | 1 | Cu | 5 |
| Inventive Example 37 | A6063 | 10 | Cu | 1 | Pd | 0.1 |
| Conventional Example 3 | A6063 | 17.5 | Cu | 1 | Ag | 1 |
| Conventional Example 4 | A6063 | | Cu | 10 | Ag | 1 |

**[Table 14]**

| | Process Steps | Type of Wire Rod 1 | Mixed Layer 3 | Surface Treatment Coating 2 | |
|---|---|---|---|---|---|
| | | | Average Thickness (nm) | Innermost Metal Layer 21 | |
| | | | | Metal Species | Average Thickness (µm) |
| Inventive Example 38 | Plating → Wiredrawing | A5005 | 10 | Cu | 5 |
| Inventive Example 39 | Plating → Wiredrawing → Annealing | A5005 | 10 | Cu | 5 |
| Inventive Example 40 | Wiredrawing → Plating | A5005 | 10 | Cu | 5 |
| Conventional Example 5 | Plating → Wiredrawing | A5005 | 16.8 | Cu | 5 |
| Conventional Example 6 | Plating → Wiredrawing → Annealing | A5005 | 16.8 | Cu | 5 |
| Conventional Example 7 | Wiredrawing → Plating | A5005 | 16.8 | Cu | 5 |
| Conventional Example 8 | No Annealing | A5005 | | Cu | 5 |
| Conventional Example 9 | With Intermediate Annealing | A5005 | | Cu | 5 |
| Conventional Example 10 | With Final Annealing | A5005 | | Cu | 5 |

### (Evaluation Method)

### <Thermal Delamination Resistance of Surface Treatment Coating with respect to Wire Rod>

To evaluate the thermal delamination resistance of the surface treatment coating with respect to the wire rod, each test sample (plated wire rod) produced by the respective method described above was heated at 200°C for 168 hours, and then, subjected to a delamination test. The delamination test was carried out based on "19. Winding Test Method" of "Plating Adhesion Test Method" specified in JIS H 8504:1999. Tables 15 to 17 show the evaluation results. In Tables 15 to 17, the thermal delamination resistance is represented by: a double circle (indicating "excellent") corresponding to a case where no delamination of plating was observed; a circle (indicating "good") corresponding to a case where 95% or more and less than 100% of the test area adhered sufficiently; a triangle (indicating "acceptable") corresponding to a case where 85% or more and less than 95% of the test area adhered sufficiently; or a cross (indicating "unacceptable") corresponding to a case where an adhering region constituted less than 85% of the test area. In this test, the samples corresponding to the double circle (excellent), the circle (good), and the triangle (acceptable) were evaluated to be at an acceptance level.

### <Solder Wettability>

The solder wettability was evaluated in the following manner. For each test sample (plated wire rod) produced by the respective method described above, a solder wet period was measured using a solder checker (SAT-5100 (trade name; manufactured by RHESCA CO., LTD.)), and the solder wettability was evaluated based on the measured value. Tables 15 to 17 show the evaluation results. Details of the measurement conditions for the solder wettability shown in Tables 15 to 17 are as follows. The solder wettability was evaluated to be "acceptable" (represented by a double circle) when the solder wet period was less than three seconds, or to be "failed" (represented by a cross) when joining was not achieved even though the test sample was immersed for three seconds or longer.
Type of Solder: Sn-3Ag-0.5Cu
Temperature: 250°C
Test piece size: φ 0.9 mm × 30 mm
Flux: Isopropyl alcohol-25% rosin
Immersion rate: 25 mm/sec.
Immersion period: 10 seconds
Immersion depth: 10 mm

### <Salt Water Corrosion Resistance>

To evaluate the salt water corrosion resistance, each test sample (plated wire rod) produced by the respective method described above was subjected to a salt water spray test using a 5 mass% NaCl aqueous solution at 35 ± 5°C. Three specimens were prepared from each test sample, and the respective specimens were subjected to the salt water spray test for eight hours. Thereafter, it was visually determined whether any corrosion product was generated. Tables 15 to 17 show the evaluation results. In Tables 15 to 17, the salt water corrosion resistance is represented by: a double circle (excellent) when no change from the state before the test was observed on all the three specimens; a circle (good) when no change from the state before the test was observed on two of the specimens; a triangle (acceptable) when no change from the state before the test was observed on one of the specimens; or a cross (unacceptable) when a change from the state before the test was observed on all of the specimens. In this test, the samples corresponding to the double circle (excellent), the circle (good), and the triangle (acceptable) were evaluated to be at an acceptance level.
Specimen size: φ 0.2 mm × 30 mm

### <Bending Fatigue Resistance Properties>

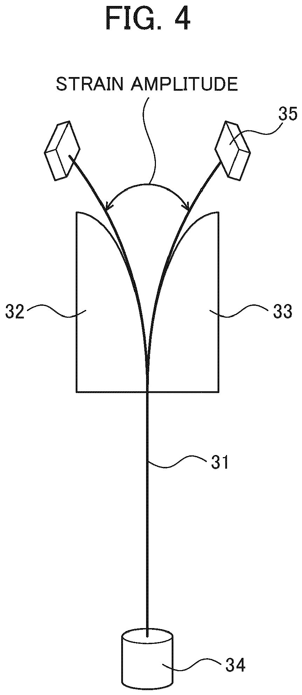

Using a reversed bending fatigue test machine manufactured by Fujii Seiki, Co. Ltd. (currently renamed to Fujii, Co. Ltd.), and jigs that can give a bending strain of 0.17% and a bending strain of 0.25%, each test sample was bent repeatedly so that the number of repetition times at rupture was measured. In this test, four wire members were each subjected to the measurement, and an average value (N=4) was calculated. As shown in FIG. 4 that is a schematic view explaining the method of measuring the bending fatigue resistance properties, the test sample (plated wire rod) 31 was inserted between the bending jigs 32 and 33 that were spaced apart from each other by about 1 mm, and moved repeatedly so as to be along the bending jigs 32 and 33 alternately. In a case where the plated wire rod was curled, it was straightened by receiving a tensile strain, so that a bending strain would be repeatedly applied to a certain point of the plated wire rod. One end of the plated wire rod 31 was fixed to a holding jig 35 so that bending was able to be repeated. A weight 34 hanged from the other end of the plated wire rod 31, the weight 34 producing a load stress corresponding to 1-5% of 0.2% proof stress of the plated wire rod 31. During the test, the holding jig 35 moved so that the plated wire rod 31 fixed to the holding jig 35 also moved, whereby the repeated bending was performed. Conditions were set so that the bending was repeated 100 times per minute. Upon rupture of the plated wire rod 31, the weight 34 falls off, and the count of the repetition times was stopped. Since the plated wire rod 31 has a high strength, the heavy weigh 34 needed to be used. In order to reduce wear of the bending jigs 32 and 33, a tape made of PTFE was attached to each of the bending jigs 32 and 33. The test sample was evaluated to be acceptable (represented by a circle) when the number of repetition times at rupture was 1,000,000 or more, and to be failed (represented by a cross) when the number of repetition times at rupture was 999,999 or less. The evaluation results are shown in the column of "Fatigue Resistance Properties" of Tables 15 to 17.

**[Table 15]**

| | Evaluation of Performance | | | |
|---|---|---|---|---|
| | Thermal Delanination Resistance | Solder Wettability | Salt Water Corrosion Resistance | Fatigue Resistance Properties |
| Inventive Example 1 | Δ | ⊚ | Δ | ○ |
| Inventive Example 2 | ○ | ⊚ | ○ | ○ |
| Inventive Example 3 | ⊚ | ⊚ | ⊚ | ○ |
| Inventive Example 4 | ⊚ | ⊚ | ⊚ | ○ |
| Inventive Example 5 | ○ | ⊚ | ⊚ | ○ |
| Inventive Example 6 | Δ | ⊚ | ⊚ | ○ |
| Inventive Example 7 | ⊚ | ○ | ○ | ○ |
| Inventive Example 8 | ⊚ | ⊚ | ○ | ○ |
| Inventive Example 9 | ⊚ | ⊚ | ⊚ | ○ |
| Inventive Example 10 | ⊚ | ⊚ | ⊚ | ○ |
| Inventive Example 11 | ⊚ | ⊚ | ⊚ | ○ |
| Inventive Example 12 | ⊚ | ⊚ | ⊚ | ○ |
| Inventive Example 13 | ⊚ | ⊚ | ⊚ | ○ |
| Inventive Example 14 | ⊚ | ⊚ | ⊚ | ○ |
| Inventive Example 15 | ⊚ | ⊚ | ⊚ | ○ |
| Inventive Example 16 | ⊚ | ⊚ | ⊚ | ○ |
| Conventional Example 1 | Δ | ○ | × | × |
| Conventional Example 2 | × | ⊚ | ○ | ○ |

**[Table 16]**

| | Evaluation of Performance | | | |
|---|---|---|---|---|
| | Thermal Delanination Resistance | Solder Wettability | Salt Water Corrosion Resistance | Fatigue Resistance Properties |
| Inventive Example 17 | Δ | ⊚ | Δ | ○ |
| Inventive Example 18 | ○ | ⊚ | ○ | ○ |
| Inventive Example 19 | ⊚ | ⊚ | ⊚ | ○ |
| Inventive Example 20 | ⊚ | ⊚ | ⊚ | ○ |
| Inventive Example 21 | ○ | ⊚ | ⊚ | ○ |
| Inventive Example 22 | Δ | ⊚ | ⊚ | ○ |
| Inventive Example 23 | ⊚ | ○ | ○ | ○ |
| Inventive Example 24 | ⊚ | ⊚ | ○ | ○ |
| Inventive Example 25 | ⊚ | ⊚ | ⊚ | ○ |
| Inventive Example 26 | ⊚ | ⊚ | ⊚ | ○ |
| Inventive Example 27 | ⊚ | ⊚ | ⊚ | ○ |
| Inventive Example 28 | ⊚ | ⊚ | ○ | ○ |
| Inventive Example 29 | ⊚ | ⊚ | ⊚ | ○ |
| Inventive Example 30 | ⊚ | ⊚ | ⊚ | ○ |
| Inventive Example 31 | ⊚ | ⊚ | ⊚ | ○ |
| Inventive Example 32 | ⊚ | ⊚ | ⊚ | ○ |
| Inventive Example 33 | ⊚ | ⊚ | ⊚ | ○ |
| Inventive Example 34 | ⊚ | ⊚ | ⊚ | ○ |
| Inventive Example 35 | ⊚ | ⊚ | ⊚ | ○ |
| Inventive Example 36 | ⊚ | ⊚ | ⊚ | ○ |
| Inventive Example 37 | ⊚ | ⊚ | ⊚ | ○ |
| Conventional Example 3 | Δ | ○ | × | × |
| Conventional Example 4 | × | ⊚ | ○ | ○ |

**[Table 17]**

| | Evaluation of Performance | | | |
|---|---|---|---|---|
| | Thermal Delanination Resistance | Solder Wettability | Salt Water Corrosion Resistance | Fatigue Resistance Properties |
| Inventive Example 38 | ⊚ | ⊚ | ⊚ | ○ |
| Inventive Example 39 | ⊚ | ⊚ | ⊚ | ○ |
| Inventive Example 40 | ⊚ | ⊚ | ⊚ | ○ |
| Conventional Example 5 | Δ | ○ | × | × |
| Conventional Example 6 | Δ | ○ | × | × |
| Conventional Example 7 | Δ | ○ | × | × |
| Conventional Example 8 | × | ⊚ | ⊚ | ○ |
| Conventional Example 9 | × | ⊚ | ⊚ | × |
| Conventional Example 10 | × | ⊚ | ⊚ | × |

As shown in Tables 15 to 17, as each of Inventive Examples 1 to 40, the respective plated wire rod was produced which had the wire rod made of aluminum or an aluminum alloy, the mixed layer, and the surface treatment coating free of aluminum and zinc. Each of Inventive Examples 1 to 40 exhibited a sufficient thermal delamination resistance, a sufficient solder wettability, a sufficient salt water corrosion resistance, and sufficient bending fatigue resistance properties. Inventive Examples 2 to 5, 7 to 16, 18 to 21, and 23 to 40 in which the average thickness of the mixed layer was within the range from 1.00 nm to 40 nm exhibited a further better heat resistant adhesion than Inventive Examples 1, 6, 17, and 22. In Inventive Examples 2 to 5, 7 to 16, 18 to 21, and 23 to 40, the surface activation treatment step was performed at a treatment temperature of 20-60°C and a current density of 0.1-20 A/dm², and for a treatment period of 1-100 seconds. In contrast, Conventional Examples 1, 3, and 5 to 7 were inferior in the salt water corrosion resistance due to the zinc-containing layer formed on the aluminum-based base material by the zincate treatment, and were also inferior in the fatigue resistance properties due to the unevenness formed by etching in the zincate treatment. Conventional Examples 2, 4, and 8 to 10 were inferior in the thermal delamination resistance because an intermetallic compound formed by the heat treatment served as the starting point of rupture. Conventional Examples 9 and 10 were inferior in the fatigue resistance properties because an intermetallic compound generated in the annealing step served as the starting point of rupture. Note that all the Conventional Examples did not include the copper-containing mixed layer according to the present invention, and the respective value described in the column of the average thickness of the mixed layer 3 of Tables 12 to 14 is the average thickness of a mixed layer containing zinc, oxygen, and a component of the aluminum base material.

### EXPLANATION OF REFERENCE NUMERALS

- 10, 10A, 10B, 31:: Plated Wire Rod
- 1:: Wire Rod
- 2:: Surface Treatment Coating
- 21:: Innermost Metal Layer
- 22:: Metal Layer (Coating Meal Layer)
- 32, 33:: Bending Jig
- 34:: Weight
- 35:: Holding Jig

## Claims

1. A plated wire rod having a wire rod made of aluminum or an aluminum alloy, and a surface treatment coating which is constituted by one or more metal layers and with which the wire rod is coated, the plated wire rod comprising:
a mixed layer in a boundary region between the wire rod and the surface treatment coating, the mixed layer containing a metal component of the wire rod, a metal component of the surface treatment coating, and an oxygen component, wherein
the one or more metal layers constituting the surface treatment coating includes an innermost metal layer which is located closest to the wire rod among the one or more metal layers, the innermost metal layer being made of copper or a copper alloy.

2. The plated wire rod according to claim 1, wherein
the mixed layer has an average thickness ranging from 1.00 nm to 40 nm, as measured at a transverse cross section of the plated wire rod.

3. The plated wire rod according to claim 1, wherein
in an observation of a cross section of the plated wire rod, a linear analysis using a STEM-EDX is performed across an area from a portion of the wire rod to a portion of the surface treatment coating so as to obtain a detected intensity profile of components of the plated wire rod,
from the detected intensity profile, a region is specified in which a detected intensity of a main component of the surface treatment coating is 0.5 to 2.0 times a detected intensity of a main component of the wire rod, and a detected intensity of an oxygen component is 0.10 times or more a sum of the detected intensity of the main component of the wire rod and the detected intensity of the main component of the surface treatment coating, and
the region specified has an average length ranging from 1.00 nm to 40 nm in a layer-stacking direction of the surface treatment coating.

4. The plated wire rod according to any one of claims 1 to 3, wherein
the innermost metal layer has an average thickness ranging from 0.01 µm to 110 µm.

5. The plated wire rod according to any one of claims 1 to 4, wherein
the surface treatment coating consists of the innermost metal layer and at least one metal layer, and
the at least one metal layer is made of a metal or an alloy selected from the group consisting of nickel, nickel alloys, cobalt, cobalt alloys, iron, iron alloys, copper, copper alloys, tin, tin alloys, silver, silver alloys, gold, gold alloys, platinum, platinum alloys, rhodium, rhodium alloys, ruthenium, ruthenium alloys, iridium, iridium alloys, palladium, and palladium alloys.

6. The plated wire rod according to claim 5, wherein
the at least one metal layer consists of at least two metal layers.

7. A method of producing the plated wire rod according to any one of claims 1 to 6, the method comprising:
a surface activation treatment step in which a surface of the wire rod is treated with an acid solution containing at least one acid selected from the group consisting of sulfuric acid, nitric acid, hydrochloric acid, hydrofluoric acid, phosphoric acid, hydrobromic acid, hydroiodic acid, acetic acid, and oxalic acid at a concentration of 10-500 mL/L in total, and an activation treatment solution containing at least one copper compound selected from the group consisting of copper sulfate, copper nitrate, copper chloride, and copper sulfamate at a content of 0.01-500 g/L in terms of metallic copper, at a treatment temperature of 20-60°C and a current density of 0.1-20 A/dm² for a treatment period of 1-100 seconds.

8. A cable made of the plated wire rod according to any one of claims 1 to 6.

9. An electric wire made of the plated wire rod according to any one of claims 1 to 6.

10. A coil made of the plated wire rod according to any one of claims 1 to 6.

11. A wire harness made of the plated wire rod according to any one of claims 1 to 6.

12. A spring member made of the plated wire rod according to any one of claims 1 to 6.

13. An enameled wire made of the plated wire rod according to any one of claims 1 to 6.

14. A lead wire made of the plated wire rod according to any one of claims 1 to 6.
